# EUROPÄISCHE PATENTSCHRIFT

(11) **EP 0 502 309 B1**
(45) Veröffentlichungstag und Bekanntmachung des Hinweises auf die Patenterteilung: **05.03.1997**
(21) Anmeldenummer: 92101444.5
(22) Anmeldetag: 29.01.1992
(51) Int. Cl.: B60G 11/46, B60G 9/00

(54) **Luftgefederte, lenkbare Räder tragende Achse eines Kraftfahrzeuges**
Axle with steered wheels and pneumatic suspension for a motor vehicle
Essieu à roues directrices et à suspension pneumatique pour véhicule à moteur

(30) Priorität: 07.03.1991 DE 4107305
(43) Veröffentlichungstag der Anmeldung: 09.09.1992
(73) Patentinhaber: MAN Nutzfahrzeuge Aktiengesellschaft, 80976 München (DE)
(72) Erfinder: Fuchs, Dietrich, Dr.-Ing., W-8047 Karlsfeld (DE)

(56) Entgegenhaltungen:
- DE-A- 1 505 412
- FR-A- 1 357 186
- GB-A- 1 053 198
- US-A- 2 874 956

## Beschreibung

Die Erfindung betrifft eine luftgefederte, lenkbare Räder tragende Achse eines Kraftfahrzeuges mit Merkmalen entsprechend dem Oberbegriff des Anspruches 1.

Die Erfindung geht aus von der DE-A-15 05 412, aus der ein Kraftfahrzeug mit einer luftgefederten Starrachse hervorgeht, deren Federung und Anlenkung je Achsseite ein Luftfederorgan und darüber hinaus ein aus mehreren Einzelblattfedern zusammengefaßtes Blattfederpaket und ein Hoch-Längsfederblatt umfaßt. Das längs- und querführende Blattfederpaket ist oben am Starrachskörper - diesen vorn und hinten überragend - befestigt. Vorne ist das Blattfederpaket mit seiner längsten Einzelblattfeder rahmenfest gelagert. Hinten ist das Blattfederpaket mit seiner längsten Einzelblattfeder unten an einer rahmenseitig hängend angelenkten Schwinge befestigt. Das Hoch-Längsfederblatt ist vor dam Achskörper angeordnet und vorne längsverschieblich am selben Bock gelagert wie das Blattfederpaket. An seinem hinteren Ende ist das Hoch-Längsfederblatt am Achskörper befestigt. Diese Art von Federung ist relativ teuer und schwergewichtig.

Bei Omnibussen oder Lastkraftwagen ist es auch bekannt, eine gekröpfte Starrachse zu verwenden, die von zwei längsstabilisierend wirkenden Hoch-Längsfederblattlenkern und einem querstabilisierenden Panhardstab geführt wird. Gerade aber der querführende Panhardstab stellt, weil unter dem Antriebsaggregat verlaufend, ein besonderes Hindernis dar.

Es ist daher Aufgabe der Erfindung, eine luftgefederte Achse mit lenkbaren Rädern zu schaffen, deren Achsführung ohne Panhardstab auskommt und im Ergebnis das Führungsverhalten gegenüber bekannten Achsführungen verbessert.

Diese Aufgabe ist erfindungsgemäß durch eine Achse mit den im Anspruch 1 angegebenen Kombinationsmerkmalen gelöst.

Vorteilhafte Ausgestaltungen dieser Lösung sind in den Unteransprüchen angegeben.

Mit der erfindungsgemäßen Lösung ergeben sich verschiedene, nachstehend kurz skizzierte Vorteile:
- kein querführender Panhardstab mehr notwendig, dadurch Gewinn an Bauraum und größere Einbauflexbilität für das Antriebsaggregat und die zugehörigen Nebenaggregate,
- keine zusätzliche Einfederung der betreffenden Vorderachse aufgrund entsprechender Bremsmomentenabstützung,
- Vergrößerung des Achsnachlaufes bei Parallel-Einfederung mit der Folge einer höheren Lenkstabilität, und
- Vergrößerung des kurvenäußeren Nachlaufes bei einseitiger Einfederung mitdem Ergebnis größerer Lenkstabilität.

Die gewollte bzw. aufgrund der Achsführungskonstruktion in Kauf zu nehmende Zwangstorsion des Achskörpers kann durch entsprechende Ausgestaltung und Bemessung desselben eingestellt und zur zusätzlichen Neigungsstabilisierung genutzt werden.

Nachstehend ist die erfindungsgemäße Achse anhand eines in der Zeichnung dargestellten Ausführungsbeispieles noch näher erläutert.

In der Zeichnung zeigen:

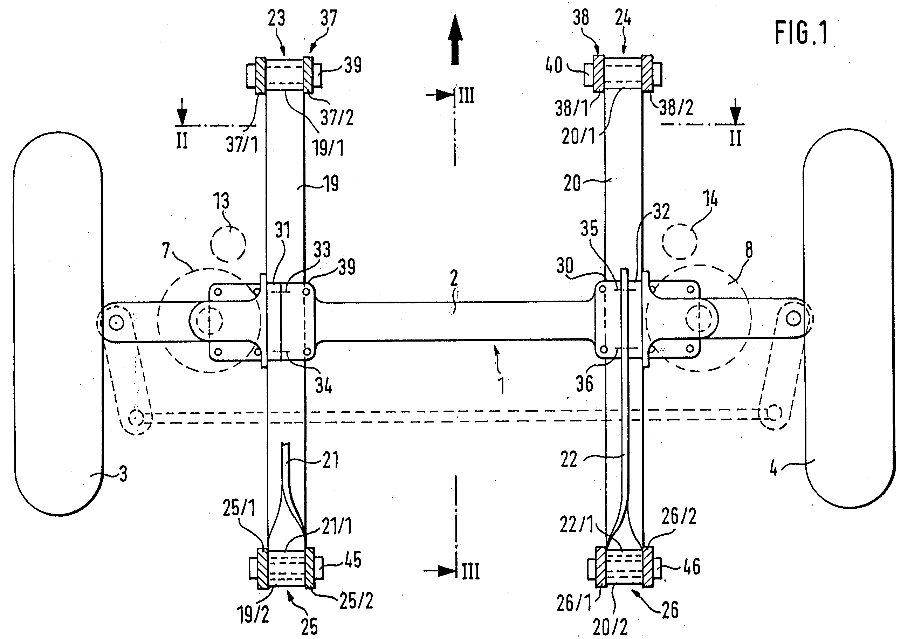

- Fig.1: eine Draufsicht auf die Achse, wobei aus Gründen der Übersichtlichkeit auf die Darstellung des Fahrzeugrahmens verzichtet wurde,

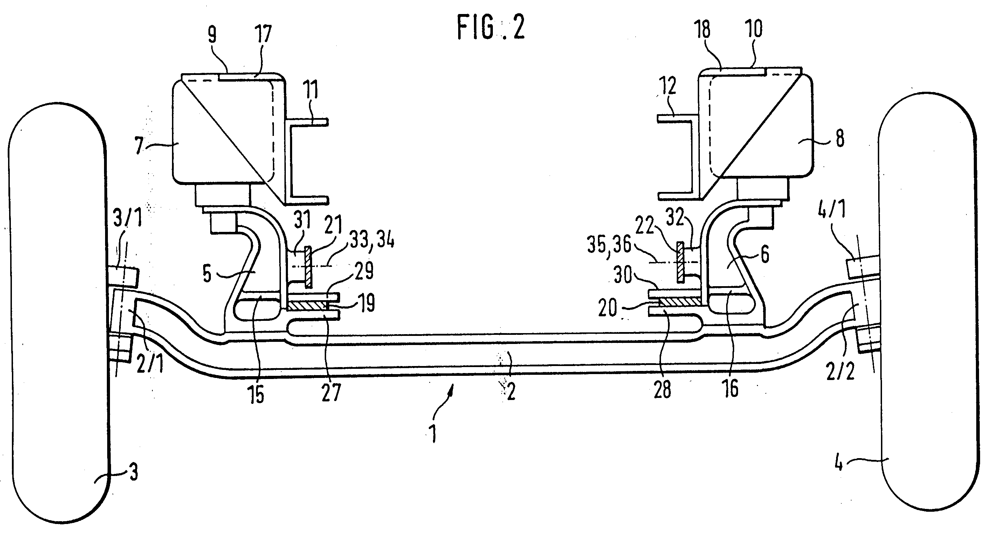

- Fig.2: eine Vorderansicht der Achse in Verbindung mit einem Querschnitt durch die Achsführung gemäß Fig. 1 entlang der Linie II-II, und

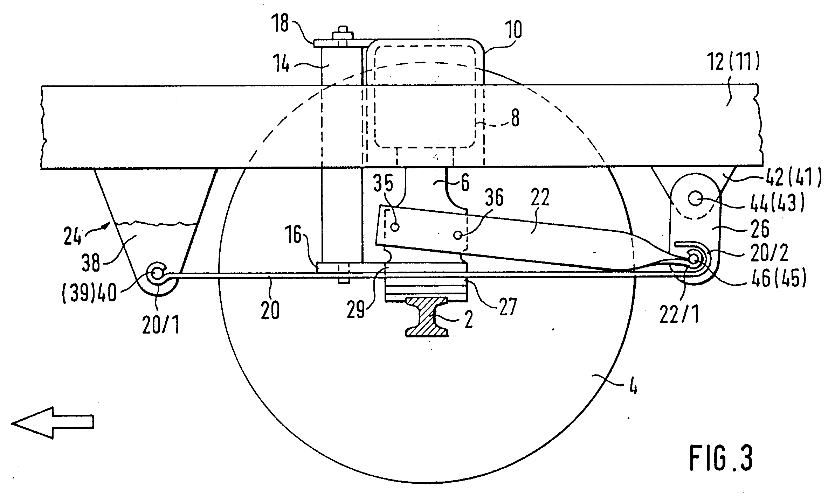

- Fig.3: einen Längsschnitt durch die Achse gemäß Fig. 1 entlang der Linie III-III.

Die insgesamt mit 1 bezeichnete Achse besteht aus einem torsionsweichen Achskörper 2, an dessen hochgekröpften, faustartigen Enden 2/1, 2/2 lenkbare Räder 3, 4 mit ihren Radträgern 3/1, 4/1 angelenkt sind. Der Achskörper 2 weist oben zwei Lagerböcke 5, 6 auf, anderen oberem Plateau je eine Luftfeder 7,8 befestigt ist. Jede der Luftfedern 7, 8 ist oben an einem Halter 9, 10 abgestützt, der außen an einem der beiden Rahmenlängsträger 11, 12 des Kraftfahrzeugs befestigt ist. In ähnlicher Weise wie die beiden Luftfedern 7, 8 sind jeweils benachbart zu diesen Stoßdämpfer 13, 14 zwischen Achskörper 2 und Rahmenlängsträger 11 bzw. 12 angeordnet, wobei zur Befestigung und Abstützung der Stoßdämpfer 13, 14 unten jeweils seitlich nach vorn am zugehörigen Lagerbock 5,6 abragende Stützarme 15, 16 und oben jeweils am Halter 9, 10 nach vorn auskragende Stützarme 17, 18 vorgesehen sind.

Zur Führung dieser Achse 1 sind in Kombination mit besagtem torsionsweichen Achskörper 2 folgende Bauteile vorgesehen:
a) je Achsseite ein Quer-Längsfederblatt 19, 20, und
b) je Achsseite ein Hoch-Längsfederblatt 21, 22, und
c) je Quer-Längsfederblatt 19, 20 eine in Fahrtrichtung vorwärts gesehen vor der Achse 1 angeordnete, rahmenfeste Anlenkung 23, 24, und
d) je Achsseite wenigstens eine rahmenlängsträgerseitig angelenkte, seitengeführte Schwinge 25, 26 für eine vorzugsweise gemeinsame längsweiche hintere Anlenkung eines Quer-Längsfederblattes 19, 20 und des zugehörigen Hoch-Längsfederblattes 21, 22.

- Zu a):: Die beiden Quer-Längsfederblätter 19, 20 dienen in Verbindung mit ihren Anlenkungen gemäß c) und d) zur Quer- und Längsführung der Achse 1. Jedes der beiden Quer-Längsfederblätter 19, 20 besteht aus wenigstens einem Stahlfederblatt oder faserverstärktem Kunststofflaminat und ist parallel zur Fahrzeuglängsachse verlaufend mit dem Achskörper 2, diesen vorn und hinten zu vorzugsweise gleichen Teilen überragend, verbunden. Im dargestellten Beispiel sind jeweils innenseitig an den beiden Lagerböcken 5, 6 auskragende Stützplateaus 27, 28 vorgesehen, auf denen je ein Quer-Längsfederblatt 19, 20 abgestützt sowie unter Zuhilfenahme einer aufgelegten Spannplatte 29, 30 festgeschraubt ist.
- Zu b).: Die beiden Hoch-Längsfederblätter 21, 22 dienen zur Momentenabstützung der Achse 1. Jedes derselben ist mit seinem vorderen Ende lage- und verdrehfest am Achskörper 2 befestigt und überragt letzteren (aus Sicht der Fahrtrichtung vorwärts betrachtet) nach hinten. Jedes Hoch-Längsfederblatt 21, 22 besteht aus wenigstens einem Stahlfederblatt oder faserverstärktem Kunststofflaminat. Im dargestellten Beispiel ist jedes Hoch-Längsfederblatt 21, 22 an der vertikalen Anlagefläche eines ebenfalls innenseitig an den Lagerböcken 5, 6 gegebenen Vorsprunges 31, 32 abgestützt und dort mittels wenigstens zweier, voneinander beabstandeter Verschraubungen 33, 34 bzw. 35, 36 fest fixiert. Am anderen Ende ist jedes der beiden Hoch-Längsfederblätter 21, 22 um 90° verschränkt und mit einem durch einen Roll- oder Biegevorgang erzeugten Lagerauge 21/1, 22/1 versehen.
- Zu c):: Als (in Fahrtrichtung vorwärts betrachtet) vor der Achse 1 liegende Anlenkung 23, 24 ist jeweils ein stabiler, an einem der beiden Rahmenlängsträger 11, 12 befestigter (angeschweißt oder angeschraubter), nach unten abragender Lagerbock 37, 38 vorgesehen. Jedes Quer-Längsfederblatt 19, 20 ist dabei mit seinem zu einem Lagerauge 19/1, 20/1 eingerollten bzw. eingebogenen vorderen Ende zwischen den beiden Seitenwangen 37/1, 37/2 bzw. 38/1, 38/2 des zugehörigen Lagerbockes 37, 38 ohne Seitenspiel eingepaßt und an letzterem mittels einer quer durchgehenden Verschraubung 39, 40 festgelegt.

Es sei an dieser Stelle darauf hingewiesen, daß bei leichteren Fahrzeugen die Anlenkungen 23, 24 anstelle durch die dargestellten zweiwangigen Lagerböcke 37, 38 auch durch einwangige Lagerschilde gebildet sein können.
- Zu d): Im dargestellten Beispiel ist für die hintere Aufhängung eines Quer- und eines Hoch-Längsfederblattes 19, 21 bzw. 20, 22 jeweils eine gemeinsame Schwinge 25, 26 vorgesehen. Dabei ist jede der beiden Schwingen 25, 26 an ihrem oberen Ende seitenstabil, aber verdrehbar an einem Lagerbock 41, 42 über eine quer durchgehende Lagerachsverschraubung 43, 44 hängend angelenkt. Der zugehörige Lagerbock 41, 42 ist dabei nach unten abragend fest (festgeschraubt oder angeschweißt) am Rahmenlängsträger 11 bzw. 12 angeordnet. Jede der beiden Schwingen 25, 26 besteht aus zumindest einer Wange, vorzugsweise aber aus zwei erforderlichenfalls durch einen Quersteg miteinander verbundenen Wangen 25/1, 25/2 bzw. 26/1, 26/2, zwischen deren unteren Enden mittels einer weiteren quer durchgehenden Lagerachsverschraubung 45, 46 ebenfalls praktisch querspielfrei die hinteren Enden eines Federblatt-Paares 19, 21 bzw. 20, 22 aufgenommen und befestigt sind. Diese Befestigungsart setzt voraus, daß jedes Hoch-Längsfederblatt 21, 22 unmittelbar über dem je Achsseite zugehörigen Quer-Längsfederblatt 19, 20 unter spitzem Winkels zu letzterem verlaufend angeordnet ist und die beiden zu Lageraugen 19/2, 20/2, 21/1, 22/1 ausgebildeten Enden eines solchen Federblatt-Paares 19, 21 bzw. 20, 22 für die gemeinsame Befestigung ausgebildet und entsprechend ineinander angeordnet sind. Im dargestellten Beispiel umgreift dabei ein Quer-Längsfederblatt 19, 20 mit seinem U-förmig nach vorn hochgebogenen Ende 19/2, 20/2 das durch Rollen bzw. Biegen hergestellte Lagerauge 21/1, 22/1 des zugehörigen Hoch-Längsfederblattes 21, 22.

Anstelle einer gemeinsamen Schwinge 25, 26 je Federblatt-Paar 19, 21 bzw. 20, 22 können auch zwei getrennte Schwingen je Achsseite für die Anlenkung der hinteren Enden jedes Federblattes 19, 20, 21, 22 vorgesehen werden. In diesem Fall können die beiden Federblätter eines Federblatt-Paares 19, 21 bzw. 20, 22 auch seitlich gegeneinander versetzt übereinander angeordnet sein.

Grundsätzlich müssen für die Lagerung, Ausbildung und Anordnung der Schwingen 25, 26 nur folgende Bedingungen erfüllt sein, nämlich, sie müssen
- eine exakte Seitenführung der Achse 1 garantieren, ferner
- die aus der Momentenabstützung resultierenden Vertikalkräfte aufnehmen können, und
- eine in Fahrzeuglängsrichtung längsweiche hintere Anlenkung der Federblätter 19, 20, 21, 22 sicherstellen.

## Patentansprüche

1. Luftgefederte, lenkbare Räder tragende Achse (1) eines Kraftfahrzeuges, mit einem Achskörper (2) und mit je Achsseite
a) einer Luftfeder (7, 8) zwischen einem Rahmen-Längsträger (11, 12) und dem Achskörper (2),
b) einer am Achskörper (2) befestigten, diesen vorn und hinten überragenden Feder (19, 20) zur Längs- und Querführung der Achse (1), und
c) einem Hoch-Längsfederblatt (21, 22) zur Momentenabstützung der Achse (1),
wobei jede Feder (19, 20) mit ihrem vorderen Ende an einer rahmenfesten Anlenkstelle (23, 24) und mit ihrem hinteren Ende an einer seitenführenden, oben rahmenseitig hängend angelenkten Schwinge (25, 26) angelenkt ist, und wobei jedes Hoch-Längsfederblatt (21, 22) an seinem einen Ende am Achskörper (2) lage- und verdrehfest befestigt und an seinem anderen Ende indirekt am Rahmen angelenkt ist, gekennzeichnet durch die Kombination eines torsionsweichen Achskörper (2) mit einer Achsführung, bei der
a) jede der beiden zur Längs- und Querführung der Achse (1) dienenden Federn durch ein einziges Quer-Längsfederblatt (19, 20) gebildet ist, und
b) jedes der beiden zur Momentenabstützung dienenden Hoch-Längsfederblätter (21, 22)
- über dem je Achsseite zugehörigen Quer-Längsfederblatt (19, 20) unter spitzem Winkel zu diesem verlaufend angeordnet ist,
- sich zwischen Achskörper (2), diesen nach hinten überragend und der Schwinge (25, 26) erstreckt, und
- mit seinem vorderen Ende lage- und verdrehfest am Achskörper (2) befestigt ist, und
c) jede der beiden auch zur Vertikalkraftaufnahme aus der Momentenabstützung dienenden Schwingen (25, 26) mit einer Lagerstelle (45, 46) das Organ zur gemeinsamen längsweichen Anlenkung der hinteren Enden eines aus Quer- und Hoch-Längsfederblatt (19, 21 bzw. 20, 22) bestehenden Federblatt-Paares bildet.

2. Achse nach Anspruch 1, dadurch gekennzeichnet, daß der torsionsweiche Achskörper (2) im Sinne einer gekröpften Faustachse ausgebildet ist.

3. Achse nach Anspruch 1, dadurch gekennzeichnet, daß jedes Hoch-Längsfederblatt (21, 22) unmittelbar über dem je Achsseite zugehörigen Quer-Längsfederblatt (19, 20) angeordnet ist und die beiden zu Lageraugen (19/2, 20/2 bzw. 21/1, 22/1) ausgebildeten hinteren Enden eines solchen Federblatt-Paares (19, 21 bzw. 20, 22) für eine gemeinsame Befestigung an der zugehörigen Schwinge (25, 26) ausgebildet und angeordnet sind.

4. Achse nach Anspruch 1, dadurch gekennzeichnet, daß jedes Hoch-Längsfederblatt (21, 22) zwar über dem je Achsseite zugehörigen Quer-Längsfederblatt (19, 20), jedoch in der Vertikalen gesehen, seitlich versetzt nach innen oder außen angeordnet ist.

5. Achse nach Anspruch 1, dadurch gekennzeichnet, daß jedes Quer-Längsfederblatt (19, 20) mit dem Achskörper (2), diesen vorn und hinten zu gleichen Teilen überragend, verbunden ist.

6. Achse nach Anspruch 1, dadurch gekennzeichnet, daß der Achskörper (2) oben zwei - je Achsseite einen - Lagerböcke (5, 6) aufweist, auf deren oberem Plateau je eine andernendes rahmenfest abgestützte Luftfeder (7, 8) befestigt ist, daß ferner jeweils innenseitig an einem Lagerbock (5, 6) ein auskragendes Stützplateau (27, 28) gegeben ist, auf dem das Quer-Längsfederblatt (19, bzw. 20) abgestützt und festgeschraubt ist, und daß jedes Hoch-Längsfederblatt (21, 22) an der vertikalen Anlagefläche eines innenseitig an dem Lagerbock (5, 6) gegebenen Vorsprung (31, 32) abgestützt und mittels wenigstens zweier voneinander beabstandeter Verschraubungen (33, 34; 35, 36) festgeschraubt ist.

7. Achse nach einem der vorhergehenden Ansprüche, dadurch gekennzeichnet, daß jedes Hoch-Längsfederblatt (21, 22) an seinem hinteren Ende um 90° verschränkt und mit einem durch Rollen oder Biegen erzeugten Lagerauge (21/1, 22/1) für Befestigung an der Schwinge (25 bzw. 26) versehen ist.

8. Achse nach Anspruch 1, dadurch gekennzeichnet, daß als vordere Anlenkung (23, 24) für je ein Quer-Längsfederblatt (19, 20) ein stabiler, an einem Rahmenlängsträger (11, 12) befestigter - angeschweißter oder angeschraubter -, nach unten abragender Lagerbock (37, 38) vorgesehen ist, und daß jedes Quer-Längsfederblatt (19, 20) mit seinem durch Rollen oder Biegen erzeugten Lagerauge (19/1, 20/1) am vorderen Ende zwischen den beiden Seitenwangen (37/1, 37/2 bzw. 38/1, 38/2) des zugehörigen Lagerbockes (37, 38) ohne Seitenspiel eingepaßt und an letzterem mittels einer quer durchgehenden Verschraubung (39, 40) festgelegt ist.

9. Achse nach Anspruch 1, dadurch gekennzeichnet, daß jede Schwinge (25, 26) hängend an ihrem oberen Ende an einem Lagerbock (41, 42) seitenstabil, um eine quer durchgehende Lagerachsverschraubung (43, 44) verdrehbar angelenkt ist und der besagte Lagerbock (41, 42) nach unten abragend fest - angeschraubt oder angeschweißt - am Rahmenlängsträger (11, 12) angeordnet ist.

10. Achse nach einem oder mehreren der vorhergehenden Ansprüche, dadurch gekennzeichnet, daß jede der beiden für die gemeinsame hintere Anlenkung eines Quer- und eines Hoch-Längsfederblattes (19, 21 bzw. 20, 22) vorgesehenen Schwingen (25, 26) aus wenigstens einer, vorzugsweise aber aus zwei, gegebenenfalls durch einen Quersteg miteinander verbundenen Wangen (25/1, 25/2 bzw. 26/1, 26/2) besteht, zwischen deren unteren Enden mittels einer weiteren quer durchgehenden Lagerachsverschraubung (45, 46) praktisch spielfrei die hinteren Enden eines Federblatt-Paares (19, 21 bzw. 20, 22) aufgenommen und befestigt sind.

## Claims

1. Air-sprung axle (1) of a motor vehicle with steered wheels, an axle beam (2) and, at each axle end, with
a) one air spring (7, 8) between one frame longitudinal member (11, 12) and the axle beam (2),
b) one spring (19, 20) for the longitudinal and transverse location of the axle (1), which spring is fastened to the axle beam (2) and projects beyond said beam (2) at the front and rear, and
c) one vertical-longitudinal spring leaf (21, 22) for the moment support of the axle (1),
each spring (19, 20) being located at its front end at a location point (23, 24) on the frame and at its rear end at a laterally guiding rocker (25, 26) located at its upper end on the frame in a suspended manner, and each vertical-longitudinal spring leaf (21, 22) being fastened at its one end to the axle beam (2) in a stable and anti-torsion manner and with its other end indirectly to the frame, characterised by the combination of an axle beam (2) designed to yield in torsion and an axle location, in which
a) each of the two springs for the longitudinal and transverse location of the axle (1) is formed by a single transverse-longitudinal spring leaf (19, 20) and
b) each of the two vertical-longitudinal spring leaves (21, 22) for the moment support
• is arranged above the transverse-longitudinal spring leaf (19, 20) associated to each axle end and runs at an acute angle relative to said spring leaf (19, 20),
• is placed between the axle beam (2), beyond which it projects at the rear, and the rocker (25, 26), and
• is fastened at its front end to the axle beam (2) in a stable and anti-torsion manner, and
c) each of the two rockers (25, 26) for absorbing the vertical forces from the moment support forms, together with a bearing point (45, 56), the organ for the common location of the rear ends of a pair of spring leaf consisting of a transverse- and a vertical-longitudinal spring leaves (19, 21 and 20, 22), said common location being designed to yield to longitudinal forces.

2. Axle according to Claim 1, characterised in that the axle beam (2) is designed to yield in torsion and formed as a dropped stub axle.

3. Axle according to Claim 1, characterised in that each vertical-longitudinal spring leaf (21, 22) is arranged directly above the transverse-longitudinal spring leaf (19, 20) associated to the respective axle end and that the two rear ends of such a pair of spring leaves (19, 21 and 20, 22) are designed as bearing eyes (19/2, 20/2 and 21/1, 22/1) and arranged for their common attachment to the associated rocker (25, 26).

4. Axles according to Claim 1, characterised in that each vertical-longitudinal spring leaf (21, 22) is arranged above the transverse-longitudinal spring leaf (19, 20) associated to the respective axle end but, seen in the vertical, is laterally offset towards the inside or outside.

5. Axle according to Claim 1, characterised in that each transverse-longitudinal spring leaf (19, 20) is connected to axle beam (2) and projects beyond it at the front and rear in equal portions.

6. Axle according to Claim 1, characterised in that the axle beam (2) is provided with two bearing brackets (5, 6) - one at each axle end - on whose upper plateau an air spring ( 7, 8) is mounted whose other end is supported on the frame, that in addition a projecting support plateau (27, 28) is provided on the inside of each bearing bracket (5, 6), on and to which plateau the transverse-longitudinal spring leaf (19, 20) is supported and bolted and that each vertical-longitudinal spring leaf (21, 22) is supported on the vertical contact face of a projection (31, 32) provided on the inside of the bearing bracket (5, 6) and is fastened to said vertical contact face by means of at least two screwed connections (33, 34; 35, 36) arranged at a distance to each other.

7. Axle according to one of the foregoing Claims, characterised in that each vertical-longitudinal leaf (21, 22) is twisted at its rear end by 90° and provided with a bearing eye (21/1, 22/1) for the attachment of the rocker (25, 26), which bearing eye is produced by means of rolling or bending.

8. Axle according to Claim 1, characterised in that a stable bearing element (37, 38) is provided as front location element (23, 24) for each transverse-longitudinal spring leaf (19, 20), which bearing bracket (37, 38) is either welded or bolted on to the respective frame longitudinal member (11, 12) and points downwards and that each transverse-longitudinal spring leaf (19, 20) with its bearing eye (19/1, 20/1) produced by means of rolling or bending is fitted at its front end between the two lateral walls (37/1, 37/2 and 38/1, 38/2) of the associated bearing bracket (37, 38) without lateral play and fixed on said bearing bracket (37, 38) by means of a screwed connection (39, 40) which is continuous in transverse direction.

9. Axle according to Claim 1, characterised in that each rocker (25, 26) is located at its upper end on a bearing bracket (41, 42) in a suspended, laterally stable manner and can be slewed round a bearing-shaft screwed connection (43, 44) which is continuous in transverse direction and that said bearing bracket (41, 42) points downwards and is firmly bolted or welded on to the frame longitudinal member (11, 12)

10. Axle according to one or several of the foregoing Claims, characterised in that each of the two rockers (25, 26) for the common rear location of one transverse- and one vertical-longitudinal spring leaf (19, 21 and 20, 22) consists of at least one, but preferably of two walls (25/1, 25/2 and 26/1, 26/2) which if necessary are interconnected by means of a transverse web, between whose lower ends the rear ends of one pair of spring leaves (19, 21 and 20, 22) are fitted and fastened with virtually no play by means of another bearing-shaft screwed connection (45, 46) which is continuous in transverse direction.

## Revendications

1. Essieu porteur (1) à roues guidées, à suspension pneumatique pour un véhicule automobile ayant un corps d'essieu (1) et de chaque côté de l'essieu :
a) un ressort pneumatique (7, 8) entre un longeron de châssis (11, 12) et le corps d'essieu (2),
b) un ressort (19, 20) fixé au corps d'essieu (2), le dépassant vers l'avant et vers l'arrière pour guider l'essieu longitudinalement et transversalement et,
c) une lame de ressort, longitudinale, en hauteur (21, 22) pour servir d'appui instantané à l'essieu (1),
chaque ressort (19, 20) étant relié par son extrémité avant à un point d'articulation (23, 24) solidaire du châssis et par son extrémité arrière à une patte (25, 26) de guidage latérale, articulée de façon suspendue en partie haute du châssis et chaque lame de ressort longitudinal haut (21, 22) est fixée par son extrémité de manière solidaire en position et en rotation sur le corps d'essieu (1) et à son autre extrémité la lame de ressort est articulée indirectement au châssis,
caractérisé par
la combinaison d'un corps d'essieu (2) souple en torsion et d'un moyen de guidage d'essieu, combinaison selon laquelle :
a) chacun des deux ressorts servant au guidage longitudinal et transversal de l'essieu (1) est formé par une seule lame de ressort longitudinale-transversale (19, 20) et,
b) chacune des deux lames de ressort longitudinales-en hauteur (21, 22) servant à l'appui instantané,
- est prévue au-dessus de chaque côté d'essieu, pour la lame de ressort longitudinale-transversale (19, 20) correspondante, avec un angle aigu par rapport à celle-ci,
- elle est engagée entre le corps d'essieu (2), en le dépassant vers l'arrière des bras (26, 25),
- et à son extrémité avant elle est fixée de manière solidaire en position et en torsion sur le corps d'essieu (2) et,
c) chacun des deux bras (25, 26) servant également à recevoir les efforts verticaux de l'appui de couple forme avec un point de palier (45, 46), l'organe pour la déviation commune, souple en longueur des extrémités arrière d'une lame de ressort longitudinale-transversale et en hauteur (19, 21 ou 20, 22) formant la paire de lames de ressort.

2. Essieu selon la revendication 1,
caractérisé en ce que
l'essieu (2) souple en torsion est réalisé comme un essieu à chapes fermées, cintré.

3. Essieu selon la revendication 1,
caractérisé en ce que
chaque lame de ressort (21, 22) est montée directement par une lame de ressort (19, 20) transversale, continue, correspondante par-dessus chaque côté de l'essieu et les deux extrémités intérieures réalisées par rapport aux oeillets d'essieu (19/2, 20/2 ou 21/1, 22/1) d'une telle paire de lames de ressort (19, 21 ou 20, 22) sont réalisées et disposées pour une fixation commune sur le bras correspondant (25, 26).

4. Essieu selon la revendication 1,
caractérisé en ce que
chaque lame de ressort longitudinale en hauteur (21, 22) est prévue par l'intermédiaire de chaque fois une lame de ressort (19, 20) correspondant à chaque essieu, vue dans la direction verticale, avec décalage latéral vers l'intérieur ou vers l'extérieur.

5. Essieu selon la revendication 1,
caractérisé en ce que
chaque lame de ressort longitudinale-transversale (19, 20) est reliée au corps d'essieu (2), en dépassant simultanément celui-ci vers l'avant et vers l'arrière.

6. Essieu selon la revendication 1,
caractérisé en ce que
le corps d'essieu (2) comporte en partie haute deux blocs de palier (5, 6) (un de chaque côté) et sur leur plateau supérieur il y a chaque fois un ressort pneumatique (7, 8) soutenu par un châssis fixe modifié et en ce qu'en outre, chaque fois au milieu on a sur le bloc de palier (5, 6), un plateau d'appui (27, 28) en saillie et sur lequel s'appuie la lame de ressort longitudinale-transversale (19, 20) et y est vissé et en ce que chaque lame de ressort longitudinale (21, 22) s'appuie au niveau de la surface verticale d'appui d'une partie en saillie (31, 32) intérieure prévue sur le bloc de palier (5, 6) et peut se visser au moins par deux moyens de vissage (33, 34, 35) écartés l'un de l'autre.

7. Essieu selon l'une des revendications précédentes,
caractérisé en ce que
chaque lame de ressort longitudinale (21, 22) comporte à son extrémité arrière, une partie recourbée à 90° et un oeillet de palier réalisé par roulage et cintrage (21/1, 22/1) pour la fixation à un bras (25, 26).

8. Essieu selon la revendication 1,
caractérisé en ce que
comme articulation avant (23, 24) pour chaque ressort lames longitudinal-transversal (19, 20) on fixe solidement un support longitudinal de châssis (11, 12) (par soudure ou brasure) avec un bloc de palier (37, 38) en saillie vers le bas et chaque lame de ressort longitudinale-transversale (19, 20) est reliée par son oeillet de palier (19/1, 20/1) obtenu par roulage et cintrage, à l'extrémité avant entre les deux parois latérales (37/1, 37/2 ou 38/1, 38/2) du bloc de palier (37, 38) correspondant sans laisser de jeu latéral en étant fixée à l'aide de moyens de vissage continu (39, 40).

9. Essieu selon la revendication 1,
caractérisé en ce que
chaque bras (25, 26) est monté en rotation, de manière suspendue à son extrémité supérieure, par l'intermédiaire d'un bloc de palier (41, 42) de manière stable latéralement, autour d'une liaison vissée continue de palier (43, 44) et le bloc de palier (41, 42) est monté fixe en saillie vers le bas (par vissage ou soudage) sur le châssis longitudinal (11, 12).

10. Essieu selon une ou plusieurs des revendications précédentes,
caractérisé en ce que
chacune des deux articulations arrière commune d'une lame de ressort longitudinale-transversale ou en hauteur (19, 21 ou 20, 22) comporte des bras (25, 26) qui assurent la liaison de préférence par deux bras et le cas échéant également par une traverse des joues (25/1, 25/2 ou 26/1, 26/2) liée par contact, et entre leurs extrémités inférieures, une autre liaison (45, 46), continue, est fixée pratiquement sans jeu pour recevoir les extrémités arrière d'une paire de ressorts lames (19, 21 ou 20, 22).
